(19) Europäisches Patentamt
European Patent Office
Office européen des brevets

(11) **EP 4 716 052 A1**

(12) **EUROPEAN PATENT APPLICATION**
published in accordance with Art. 153(4) EPC

(43) Date of publication:
**25.03.2026  Bulletin 2026/13**

(21) Application number: 24818740.3

(22) Date of filing: **06.06.2024**

(51) International Patent Classification (IPC):
*H02J 3/28* (2026.01)

(52) Cooperative Patent Classification (CPC):
**H02J 3/0014; H02J 3/00; H02J 3/01; H02J 3/28; H02J 3/32**

(86) International application number:
**PCT/CN2024/097814**

(87) International publication number:
**WO 2024/251209 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **09.06.2023  CN 202310687041**

(71) Applicants:
• **Contemporary Amperex Future Energy Research Institute (Shanghai) Limited**
  **Shanghai 200241 (CN)**
• **Contemporary Amperex Technology Co., Limited**
  **Ningde, Fujian 352100 (CN)**

(72) Inventors:
• **HUANG, Xisheng**
  **Shanghai 200241 (CN)**
• **XU, Xiangxiang**
  **Shanghai 200241 (CN)**
• **YU, Dongxu**
  **Shanghai 200241 (CN)**
• **LU, Yanhua**
  **Shanghai 200241 (CN)**

(74) Representative: **Gong, Jinping**
**CocreateIP**
**Neumarkter Straße 21**
**81673 München (DE)**

(54) **ENERGY STORAGE VALVE SUBMODULE AND HIGH-VOLTAGE DIRECTLY-CONNECTED ENERGY STORAGE SYSTEM**

(57)    This application relates to an energy storage valve submodule and a high-voltage direct-connected energy storage system, where a suppression circuit for underdamped oscillation is additionally provided in the energy storage valve submodule. The suppression circuit is connected in series with a first capacitor, and a resistance-capacitance branch formed by the suppression circuit and the first capacitor connected in series is connected in parallel with a power conversion unit and an energy storage unit, respectively. The suppression circuit can suppress an underdamped oscillation current generated in the energy storage valve submodule at a connection and disconnection state switching moment by adjusting a resistance value of an impedance in the energy storage valve submodule, reducing the underdamped oscillation current generated in the energy storage valve submodule at the connection and disconnection state switching moment, thereby reducing harm caused by the underdamped oscillation current to the energy storage valve submodule, and thus improving reliability of the energy storage valve submodule.

FIG. 2

**Description**

**CROSS-REFERENCE TO RELATED APPLICATIONS**

This application claims the priority of Chinese Patent Application No. 2023106870411 filed on June 9, 2023 and entitled "ENERGY STORAGE VALVE SUBMODULE AND HIGH-VOLTAGE DIRECT-CONNECTED ENERGY STORAGE SYSTEM", which is incorporated herein by reference in its entirety.

**TECHNICAL FIELD**

This application relates to the field of energy storage technology, in particular to an energy storage valve submodule and a high-voltage direct-connected energy storage system.

**BACKGROUND**

With the development of large-scale energy storage, high-voltage direct-connected energy storage systems have gradually gained widespread application.

In some scenarios, a high-voltage direct-connected energy storage system includes a plurality of cascaded energy storage valve submodules, and each energy storage valve submodule includes an energy storage unit. In application, charging and discharging of the energy storage unit in each energy storage valve submodule can be achieved by controlling a connection and disconnection state of each energy storage valve submodule.

However, in the above scenarios, the reliability of the energy storage valve submodule is relatively low.

**SUMMARY**

In view of the above issue, it is necessary to provide an energy storage valve submodule and a high-voltage direct-connected energy storage system capable of improving the reliability of the energy storage valve submodule.

According to a first aspect, an embodiment of this application provides an energy storage valve submodule. The energy storage valve submodule includes a power conversion unit, a first capacitor, a suppression circuit, and an energy storage unit, the suppression circuit is connected in series with the first capacitor to form a resistance-capacitance branch, and the resistance-capacitance branch is connected in parallel with the power conversion unit and the energy storage unit, respectively.

The energy storage valve submodule provided by this embodiment of this application is additionally provided with a suppression circuit for underdamped oscillation, the suppression circuit is connected in series with the first capacitor, and the resistance-capacitance branch formed by the suppression circuit and the first capacitor connected in series is connected in parallel with the power conversion unit and the energy storage unit, respectively. The suppression circuit can suppress an underdamped oscillation current generated in the energy storage valve submodule at a connection and disconnection state switching moment by adjusting a resistance value of an impedance in the energy storage valve submodule, significantly reducing the underdamped oscillation current generated in the energy storage valve submodule at the connection and disconnection state switching moment, achieving an effect of suppressing the underdamped oscillation current, and greatly reducing harm caused by the underdamped oscillation current to the energy storage valve submodule, thus improving the reliability of the energy storage valve submodule.

In one embodiment, the first capacitor includes a direct-current support capacitor.

In one embodiment, the energy storage valve submodule includes a power conversion unit, a direct-current support capacitor, a suppression circuit, and an energy storage unit, the suppression circuit is connected in series with the direct-current support capacitor to form a resistance-capacitance branch, and the resistance-capacitance branch is connected in parallel with the power conversion unit and the energy storage unit, respectively.

The energy storage valve submodule provided by this embodiment of this application is additionally provided with a suppression circuit for underdamped oscillation, the suppression circuit is connected in series with the direct-current support capacitor, and the resistance-capacitance branch formed by the suppression circuit and the direct-current support capacitor connected in series is connected in parallel with the power conversion unit and the energy storage unit, respectively. The suppression circuit can suppress an underdamped oscillation current generated in the energy storage valve submodule at a connection and disconnection state switching moment by adjusting a resistance value of an impedance in the energy storage valve submodule, significantly reducing the underdamped oscillation current generated in the energy storage valve submodule at the connection and disconnection state switching moment, achieving an effect of suppressing the underdamped oscillation current, and greatly reducing harm caused by the underdamped oscillation current to the energy storage valve submodule, thus improving the reliability of the energy storage valve submodule.

In one embodiment, the suppression circuit includes a resistor element.

In this embodiment of this application, a resistor element is used to serve as the suppression circuit. Thus, the resistor element provides a resistance value required to suppress the underdamped oscillation current generated in the energy storage valve submodule at a connection moment, which is not only cost-effective but also convenient and simple, greatly reducing additional impact on overall functionality of the energy storage valve submodule, thereby further improving the reliability of the energy storage valve submodule.

In one embodiment, the suppression circuit further includes a switch circuit, and the switch circuit is configured to control a connection and disconnection state of the resistor element.

In this embodiment of this application, the switch circuit controls whether the resistor element is in a connection state or a disconnection state in the energy storage valve submodule, and only when connected in the energy storage valve submodule to work, the resistor element can suppress the underdamped oscillation generated at a connection moment in a corresponding state of the energy storage unit, thereby improving precision of suppression of the underdamped oscillation in the energy storage valve submodule.

In one embodiment, the switch circuit is connected in parallel with the resistor element.

In this embodiment of this application, the switch circuit is connected in parallel with the resistor element, and by turning the switch circuit on and off, the resistor element is controlled to be in a connection state or a disconnection state in the energy storage valve submodule. Only when connected in the energy storage valve submodule to work, the resistor element can suppress the underdamped oscillation generated at a connection moment in a corresponding state of the energy storage unit, thereby improving precision of suppression of the underdamped oscillation in the energy storage valve submodule.

In one embodiment, the suppression circuit further includes a switch circuit, the switch circuit is connected in parallel with the resistor element.

In this embodiment of this application, the switch circuit is connected in parallel with the resistor element, and by turning the switch circuit on and off, the resistor element is controlled to be in a connection state or a disconnection state in the energy storage valve submodule. Only when connected in the energy storage valve submodule to work, the resistor element can suppress the underdamped oscillation generated at a connection moment in a corresponding state of the energy storage unit, thereby improving precision of suppression of the underdamped oscillation in the energy storage valve submodule.

In one embodiment, the resistor element includes a first resistor and a second resistor connected in series with each other, the switch circuit further includes a first switch and a second switch, the first switch is connected in parallel with the first resistor, and the second switch is connected in parallel with the second resistor.

In this embodiment of this application, two resistors are additionally provided in the energy storage valve submodule, and then two different switches are additionally provided to respectively control a connection and disconnection state of the two resistors in the energy storage valve submodule. Only one of the two resistors is connected when the energy storage unit is in a charging state or when the energy storage unit is in a discharging state. On this basis, resistance values of the two resistors are different, so that a degree of suppression of underdamped oscillation varies when the energy storage unit is in the charging state or when the energy storage unit is in the discharging state, thereby enabling more precise suppression of underdamped oscillation in different states of charging and discharging of the energy storage unit.

In one embodiment, the first switch and/or the second switch is a diode.

In this embodiment of this application, a diode is used to serve as the first switch and the second switch. Since a diode requires no control and switches between an on state and an off state based on a voltage in a circuit, the diode has advantages of high switching speed and extremely short switching time, enabling rapid and precise control of a connection and disconnection state of the resistor element, thereby achieving more precise suppression of underdamped oscillation in different states of charging and discharging of the energy storage unit.

In one embodiment, a resistance value of the first resistor is greater than a resistance value of the second resistor.

In this embodiment of this application, by setting the resistance value of the first resistor to be greater than the resistance value of the second resistor, a larger degree of suppression of an underdamped oscillation current generated at a connection moment when the energy storage unit is in a charging state can be achieved, while a degree of suppression of an underdamped oscillation current generated at a connection moment when the energy storage unit is in a discharging state may be smaller. Thus, by setting different resistance values for the first resistor and the second resistor, differentiated suppression of the underdamped oscillation current generated at the connection moment when the energy storage unit is in the charging state or the discharging state is achieved, thereby improving precision of suppression of the underdamped oscillation in the energy storage valve submodule.

In this embodiment of this application, by setting the resistance value of the first resistor to be greater than the resistance value of the second resistor, a larger degree of suppression of an underdamped oscillation current generated at a connection moment when the energy storage unit is in a charging state can be achieved, while a degree of suppression of an underdamped oscillation current generated at a connection moment when the energy storage unit is in a discharging state may be smaller. Thus, by setting different resistance values for the first resistor and the second resistor, differentiated suppression of the underdamped oscillation current generated at the connection moment when the energy storage unit is in the charging state or the discharging state is achieved, thereby improving precision of suppression of the underdamped oscillation in the energy storage valve submodule.

In one embodiment, the resistor element includes a third resistor and a fourth resistor connected in parallel with each other, the switch circuit further includes a third switch and a fourth switch, the third switch is connected in series with the third resistor, and the fourth switch is connected in series with the fourth resistor.

In this embodiment of this application, two resistors are additionally provided in the energy storage valve submodule, and then two different switches are additionally provided to respectively control a connection and disconnection state of the two resistors in the energy storage valve submodule. Only one of the two resistors is connected when the energy storage unit is in a charging state or when the energy storage unit is in a discharging state. On this basis, resistance values of the two resistors are different, so that a degree of suppression of underdamped oscillation varies when the energy storage unit is in the charging state or when the energy storage unit is in the discharging state, thereby enabling more precise suppression of underdamped oscillation in different states of charging and discharging of the energy storage unit.

In one embodiment, the third switch and/or the fourth switch is a diode.

In this embodiment of this application, a diode is used to serve as the third switch and the fourth switch. Since a diode requires no control and switches between an on state and an off state based on a voltage in a circuit, the diode has advantages of high switching speed and extremely short switching time, enabling rapid and precise control of a connection and disconnection state of the resistor element, thereby achieving more precise suppression of underdamped oscillation in different states of charging and discharging of the energy storage unit.

In one embodiment, a resistance value of the third resistor is greater than a resistance value of the fourth resistor.

In this embodiment of this application, by setting the resistance value of the third resistor to be greater than the resistance value of the fourth resistor, a larger degree of suppression of an underdamped oscillation current generated at a connection moment when the energy storage unit is in a charging state can be achieved, while a degree of suppression of an underdamped oscillation current generated at a connection moment when the energy storage unit is in a discharging state may be smaller. Thus, by setting different resistance values for the third resistor and the fourth resistor, differentiated suppression of the underdamped oscillation current generated at the connection moment when the energy storage unit is in the charging state or the discharging state is achieved, thereby improving precision of suppression of the underdamped oscillation in the energy storage valve submodule.

In one embodiment, a resistance value range of the resistor element includes 10 milliohms (mΩ) to 500 mΩ.

In this embodiment of this application, the resistance value range of the resistor element is set to 10 mΩ to 500 mΩ, enabling the resistor element to match a capacitance value of the first capacitor, an inductance value of an equivalent stray inductance in the energy storage unit, and a resistance value of an equivalent internal resistance in the energy storage unit in a high-voltage direct-connected energy storage system scenario, thereby enabling precise suppression of underdamped oscillation in the energy storage valve submodule in the high-voltage direct-connected energy storage system scenario.

In one embodiment, the energy storage valve submodule further includes a second capacitor, and the second capacitor is connected in parallel with the resistance-capacitance branch.

In this embodiment of this application, the second capacitor is connected in parallel with the resistance-capacitance branch as a whole, so that overvoltage stress at a turn-off moment of a power device in the power conversion unit can be reduced, reducing a risk of failure of the power device in the power conversion unit due to excessive overvoltage stress, thus improving operational reliability of the power device in the power conversion unit and further improving operational reliability of the energy storage valve submodule.

In one embodiment, the second capacitor includes a buffer capacitor.

In one embodiment, the energy storage valve submodule further includes a buffer capacitor, and the buffer capacitor is connected in parallel with the resistance-capacitance branch.

In this embodiment of this application, the buffer capacitor is connected in parallel with the resistance-capacitance branch as a whole, so that overvoltage stress at a turn-off moment of a power device in the power conversion unit can be reduced, thereby reducing a risk of failure of the power device in the power conversion unit due to excessive overvoltage stress, thus improving operational reliability of the power device in the power conversion unit and further improving operational reliability of the energy storage valve submodule.

In one embodiment, a capacitance value of the second capacitor is less than a capacitance value of the first capacitor.

In this embodiment of this application, by setting the capacitance value of the second capacitor to be less than the capacitance value of the first capacitor, a certain distinction is made between high-frequency current passing through the second capacitor and high-frequency current passing through the first capacitor at a connection moment of the energy storage valve submodule. Since the capacitance value of the second capacitor is significantly less than the capacitance value of the first capacitor, a risk of exacerbating a degree of underdamped oscillation of the energy storage valve submodule due to an excessively large capacitance value of the second capacitor is reduced, reducing a risk of additional impact while reducing overvoltage stress at the turn-off moment of the power device in the power conversion unit, thus improving operational reliability of the energy storage valve submodule.

In one embodiment, a capacitance value of the buffer capacitor is less than a capacitance value of the direct-current support capacitor.

In this embodiment of this application, by setting the capacitance value of the buffer capacitor to be less than the capacitance value of the direct-current support capacitor, a certain distinction is made between high-frequency current passing through the buffer capacitor and high-frequency current passing through the direct-current support capacitor at a connection moment of the energy storage valve submodule. Since the capacitance value of the buffer capacitor is significantly less than the capacitance value of the direct-current support capacitor, a risk of exacerbating a degree of underdamped oscillation of the energy storage valve submodule due to an excessively large capacitance value of the buffer capacitor is reduced, reducing a risk of additional impact while reducing overvoltage stress at the turn-off moment of the power device in the power conversion unit, thus improving operational reliability of the energy storage valve submodule.

In one embodiment, a capacitance value range of the second capacitor includes 10 microfarads (uF) to 300 uF.

In this embodiment of this application, the capacitance value range of the second capacitor is set to include 10 uF to 300 uF, reducing overvoltage stress at a turn-off moment of a power device in the power conversion unit in a high-voltage direct-connected energy storage scenario and also reducing additional impact on an overall topology of the energy storage valve submodule, thus improving operational reliability of the energy storage valve submodule.

In one embodiment, a capacitance value range of the buffer capacitor includes 10 uF to 300 uF.

In this embodiment of this application, the capacitance value range of the buffer capacitor is set to include 10 uF to 300 uF, enabling reduction of overvoltage stress at a turn-off moment of a power device in the power conversion unit in a high-voltage direct-connected energy storage scenario while reducing additional impact on an overall topology of the energy storage valve submodule, thus improving operational reliability of the energy storage valve submodule.

In one embodiment, the energy storage valve submodule further includes a bypass circuit, and the bypass circuit is connected in parallel with the energy storage valve submodule.

In this embodiment of this application, by providing a bypass circuit between ports where the energy storage valve submodule is connected to a main circuit of a high-voltage direct-connected energy storage system, the energy storage valve submodule can be disconnected from the high-voltage direct-connected energy storage system in a case of a fault in the energy storage valve submodule, thereby improving operational stability and safety of the high-voltage direct-connected energy storage system.

In one embodiment, a connection and disconnection switching frequency of the energy storage valve submodule is positively correlated with energy loss generated by the suppression circuit.

In this embodiment of this application, based on a characteristic that the connection and disconnection switching frequency of the energy storage valve submodule is positively correlated with the energy loss generated by the suppression circuit, an equivalent connection and disconnection switching frequency for a single connection and disconnection operation of the energy storage valve submodule in the high-voltage direct-connected energy storage system is set, enabling connection and disconnection of the energy storage valve submodule at a low equivalent connection and disconnection switching frequency, thereby reducing loss of the energy storage valve submodule and improving economic efficiency and safety of application of the energy storage valve submodule.

In one embodiment, a rate of change of a turn-off current of a power device in the power conversion unit is inversely correlated with a parameter value of a drive device in a drive circuit of the power device.

In this embodiment of this application, based on a characteristic that the rate of change of the turn-off current of the power device in the power conversion unit is inversely correlated with the parameter value of the drive device in the drive circuit of the power device, the rate of change of the turn-off current of the power device in the power conversion unit can be reduced, further reducing a turn-off overvoltage of the power device in the power conversion unit and significantly reducing a problem of failure of the power device in the power conversion unit due to excessive overvoltage stress, thus improving operational reliability of the power conversion unit.

In one embodiment, the parameter value of the drive device includes a resistance value of a gate turn-off resistor in the drive circuit, and/or a capacitance value of a gate capacitor in the drive circuit.

According to a second aspect, an embodiment of this application provides a high-voltage direct-connected energy storage system, and the high-voltage direct-connected energy storage system includes the energy storage valve submodule provided in any embodiment according to the first aspect.

The above description is only an overview of the technical solutions of this application. To enable a clearer understanding of the technical means of this application, implementation can be carried out in accordance with the content of the specification. To make the above and other objectives, features, and advantages of this application more apparent and understandable, specific embodiments of this application are provided below.

## BRIEF DESCRIPTION OF DRAWINGS

To more clearly illustrate the technical solutions of the embodiments of this application, the drawings required for use in the embodiments of this application are briefly introduced below. It is apparent that the drawings described below are merely some embodiments of this application. For those of ordinary skill in the art, other drawings can still be obtained based on the drawings without creative effort. In the drawings:

FIG. 1 is a schematic diagram of an architecture of a high-voltage direct-connected energy storage system in one embodiment;

FIG. 2 is a schematic diagram of a topology of an energy storage valve submodule in one embodiment;

FIG. 3 is a schematic diagram of an equivalent stray inductance and an equivalent internal resistance of an energy storage unit in an energy storage valve submodule in one embodiment;

FIG. 4 is a schematic diagram of a topology of an energy storage valve submodule in another embodiment;

FIG. 5 is a schematic diagram of a topology of an energy storage valve submodule in still another embodiment;

FIG. 6 is a schematic diagram of an implementation structure of a power conversion unit in an energy storage valve submodule in one embodiment;

FIG. 7 is a schematic diagram of an implementation structure of a power conversion unit in an energy storage valve submodule in another embodiment;

FIG. 8 is a schematic diagram of an implementation structure of a suppression circuit in an energy storage valve submodule in one embodiment;

FIG. 9 is a schematic diagram of an equivalent network after a suppression circuit is additionally provided in an energy storage valve submodule in one embodiment;

FIG. 10 is a schematic diagram of an implementation structure of a suppression circuit in an energy storage valve submodule in another embodiment;

FIG. 11 is a schematic diagram of an implementation structure of a switch circuit in a suppression circuit in one embodiment;

FIG. 12 is a schematic diagram of an implementation structure of a suppression circuit in an energy storage valve submodule in another embodiment;

FIG. 13 is a schematic diagram of an implementation structure of a suppression circuit in an energy storage valve submodule in still another embodiment;

FIG. 14 is a schematic diagram of a structure with a second capacitor additionally provided in an energy storage valve submodule in one embodiment;

FIG. 15 is a schematic diagram of a drive circuit of a power device in a power conversion unit in one embodiment; and

FIG. 16 is a schematic diagram of a structure with a bypass circuit additionally provided in an energy storage valve submodule in one embodiment.

Reference signs:

10: power conversion unit;
20: first capacitor;
30: energy storage unit;
40: suppression circuit;
401: resistor element;
402: switch circuit;
50: second capacitor; and
60: bypass circuit.

## DESCRIPTION OF EMBODIMENTS

The embodiments of the technical solutions of this application are described in detail below with reference to the accompanying drawings. The following embodiments are merely intended for a clearer description of the technical solutions of this application and are merely used as examples, which do not constitute any limitations on the protection scope of this application.

Unless otherwise defined, all technical and scientific terms used herein have the same meanings as commonly understood by those skilled in the technical field of this application. The terms used herein are only for the purpose of describing specific embodiments and are not intended to limit this application. The terms "include" and any variations thereof in the specification, claims, and descriptions of the drawings of this application are intended to cover non-exclusive inclusion. In the description of the embodiments of this application, technical terms "first", "second", "third", "fourth", and the like are used only to distinguish between different objects and cannot be understood as indicating or implying relative importance or implicitly indicating a quantity, specific order, or primary-secondary relationship of the indicated technical features. In the description of the embodiments of this application, "a plurality" means two or more, unless otherwise explicitly and specifically limited.

In this specification, reference to "embodiment" means that specific features, structures, or characteristics described with reference to the embodiment may be included in at least one embodiment of this application. The appearance of the phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, unless otherwise explicitly specified and limited, technical terms such as "connected" should be understood in a broad sense, for example, it may be a direct connection or an indirect connection through an intermediate medium, and may be an internal communication between two elements or an interaction relationship between two elements. For those of ordinary skill in the art, specific meanings of the above terms in the embodiments of this application can be understood based on specific circumstances.

A high-voltage direct-connected energy storage system is a new type of energy storage system utilizing modular multilevel cascade technology in which cascading of a plurality of energy storage valve submodules can simultaneously achieve alternating-current and direct-current power conversion and energy storage, with advantages such as high modularity and good harmonic characteristics, and is therefore increasingly widely used in power grids. Each energy storage valve submodule in the high-voltage direct-connected energy storage system includes an energy storage unit, and the energy storage unit includes a battery pack. In practical applications, charging and discharging of the energy storage unit in each energy storage valve submodule can be achieved by controlling the cascaded energy storage valve submodules.

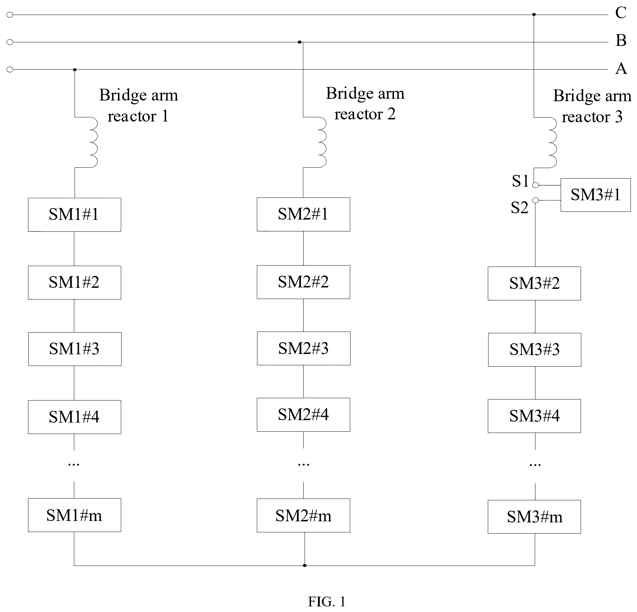

FIG. 1 is a schematic diagram of an architecture of a high-voltage alternating-current direct-connected energy storage system, exemplified by a direct-connected energy storage system for three-phase power grids A, B, and C. As shown in FIG. 1, the high-voltage direct-connected energy storage system includes three-phase energy storage cascade chains A, B, and C, and each phase of energy storage cascade chain includes one bridge arm reactor and m energy storage modules. The energy storage modules on the three-phase energy storage cascade chains are respectively denoted as SM1#m, SM2#m, and SM3#m, where m is 1, 2, 3, ..., and n. In other embodiments, such as in a high-voltage direct-current direct-connected energy storage system, a converter valve may convert three-phase alternating-current power into direct-current power, the energy storage valve is directly connected to a direct-current grid, and the energy storage valve includes a plurality of energy storage valve submodules, and the like.

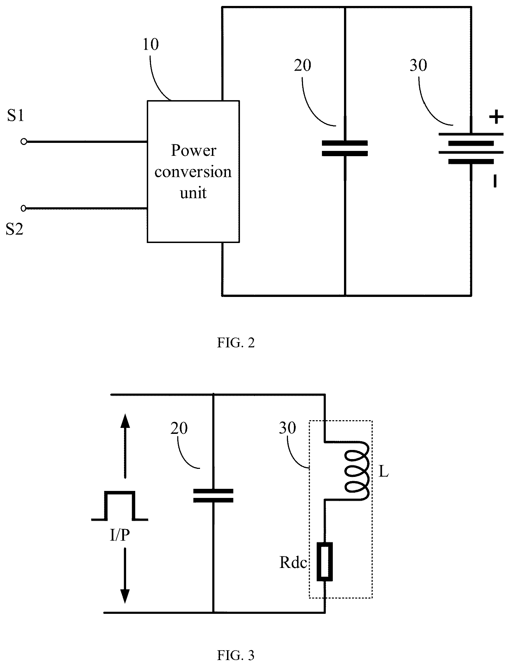

In related technologies, a topology of an energy storage valve submodule in a high-voltage direct-connected energy storage system is shown in FIG. 2, including a power conversion unit 10, a first capacitor 20, and an energy storage unit 30, where S1 and S2 in FIG. 2 represent two connection ports. Each energy storage valve submodule needs to be connected to a main circuit of the high-voltage direct-connected energy storage system through the two connection ports S1 and S2, so as to be connected to a high-voltage power grid via the main circuit, where the connection relationship herein can refer to S1 and S2 in FIG. 1.

Typically, the energy storage unit internally has a relatively large equivalent internal resistance and equivalent stray inductance, the equivalent internal resistance and equivalent stray inductance originate not only from a connection bar within the energy storage unit but also from a busbar connecting the energy storage unit to the power conversion unit in the topology of the entire energy storage valve submodule. After the energy storage unit is connected in a manner shown in FIG. 2, the equivalent resistance and equivalent stray inductance within the energy storage unit and the first capacitor are equivalent to a parallel RLC network. The energy storage valve submodule includes two states in the entire high-voltage direct-connected energy storage system: a connection state and a disconnection state. During connection and disconnection state switching of the energy storage valve submodule, a current from the main circuit of the high-voltage direct-connected energy storage system enters the energy storage valve submodule, and this current can be regarded as a step current source excitation for the RLC network. Referring to FIG. 3, FIG. 3 is a schematic diagram of an equivalent parallel RLC network of the topology of the energy storage valve submodule, where L represents the equivalent stray inductance, Rdc represents the equivalent internal resistance, I/P represents the step current source excitation, and the power conversion unit in the energy storage valve submodule is not shown in FIG. 3.

Due to a relatively large equivalent stray inductance, an inductive reactance of an equivalent stray inductance L in the energy storage valve submodule does not match a capacitive reactance of the first capacitor. Under this condition, once under the step current source excitation I/P, the mismatch between the inductive reactance of the equivalent stray inductance L and the capacitive reactance of the first capacitor causes the entire RLC network to undergo underdamped oscillation, forming an underdamped network, thereby causing underdamped oscillation between the first capacitor and the energy storage unit.

This underdamped oscillation may cause certain harm to the energy storage valve submodule, including but not limited to overcurrent in the energy storage unit, thereby resulting in damage, degradation, or reduced lifespan of the energy storage unit. In addition, an increase in capacitor current in the energy storage valve submodule, for example, an increase of approximately 30%, increases the weight, volume, and costs of the capacitor; and if the energy storage valve submodule operates in an overcurrent state for a long time, significant current stress may also be generated in electrical components in the energy storage valve submodule. This affects the operational reliability of the energy storage valve submodule.

To address this, at least one of the following methods can be used: increasing a capacitance value of a capacitor in the energy storage valve submodule, reducing stray inductance, increasing resistance, and the like for the energy storage submodule. However, since the main source of the equivalent stray inductance in the energy storage unit is the connection bar within the energy storage unit and the busbar connecting the energy storage unit to the power conversion unit, it is difficult to reduce the equivalent stray inductance. Additionally, the equivalent internal resistance in the energy storage unit mainly originates from the internal resistance of a large number of internal series-parallel cells, the equivalent internal resistance has a relatively low resistance value, making the equivalent internal resistance fluctuate significantly with charging and discharging frequencies, and thus the equivalent internal resistance is insufficient to suppress underdamped oscillation. If a resistor is additionally provided in the main circuit of the high-voltage direct-connected energy storage system, since the charging and discharging currents of the energy storage in the high-voltage direct-connected energy storage system are as high as thousands of amperes, even adding a milliohm-level resistor may cause significant loss, leading to significant temperature rise, thereby affecting the thermal design and lifespan of the energy storage unit. If oscillation is suppressed by increasing the capacitance of the capacitor in the energy storage valve submodule, the capacitance value of the capacitor needs to be increased to several hundred mF, and the increase in capacitance value is accompanied by increases in the volume, weight, and costs of the capacitor, which affects the applicability and convenience of the energy storage valve submodule to some extent.

In view of the above consideration, it is currently not feasible to suppress underdamped oscillation by adjusting parameters in the energy storage valve submodule. Based on this, in the embodiments of this application, the topology of the energy storage valve submodule is improved by additionally providing an underdamped oscillation suppression circuit in the energy storage valve submodule. This suppression circuit suppresses an underdamped oscillation current generated in the energy storage valve submodule at a connection and disconnection state switching moment, significantly reducing the underdamped oscillation current generated in the energy storage valve submodule at the connection and disconnection state switching moment, achieving an effect of suppressing the underdamped oscillation current, and greatly reducing harm caused by the underdamped oscillation current to the energy storage valve submodule, thereby improving the reliability of the energy storage valve submodule.

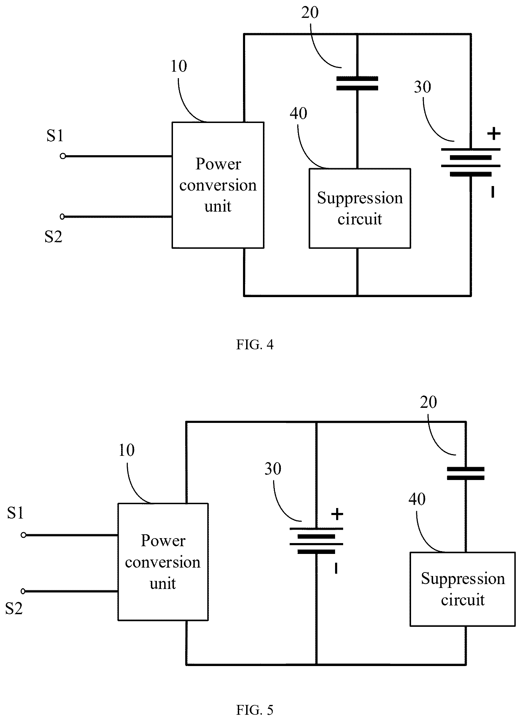

The detailed implementation process of the energy storage valve submodule provided by this application is described below through specific embodiments. FIG. 4 is a schematic diagram of a topology of an energy storage valve submodule according to an embodiment of this application. The energy storage valve submodule includes a power conversion unit 10, a first capacitor 20, a suppression circuit 40, and an energy storage unit 30. The suppression circuit 40 is connected in series with the first capacitor 20 to form a resistance-capacitance branch, and the resistance-capacitance branch is connected in parallel with the power conversion unit 10 and the energy storage unit 30, respectively.

In this embodiment of this application, the energy storage valve submodule generally refers to any submodule in an energy storage system, where the energy storage system can regulate a direction or magnitude of power flow in a power grid system, similar to the role of a valve, and is also referred to as an energy storage valve. However, it should be emphasized that in this embodiment of this application, the submodules in the energy storage system are referred to as energy storage valve submodules, which is merely an example of a designation for each submodule in the energy storage system and is not intended to limit the function, structure, or application scenario of each submodule. Therefore, during use, they can also be referred to as energy storage submodules, charge-discharge submodules, submodules, and the like, based on actual needs, and the names of the submodules in the energy storage system are not limited in this application.

In this embodiment of this application, a suppression circuit 40 is connected in series with a branch where the first capacitor 20 is located in the energy storage valve submodule, forming a resistance-capacitance branch, and the resistance-capacitance branch is connected in parallel with both the power conversion unit 10 and the energy storage unit 30. It can be understood that FIG. 4 is only an example of one connection method, and in some scenarios, the resistance-capacitance branch may also be connected in a manner shown in FIG. 5.

In one embodiment, the first capacitor 20 includes a direct-current support capacitor. The direct-current support capacitor refers to a capacitor located at a direct-current end of the module, having a relatively large capacitance value, and configured to support a voltage of the module or suppress voltage fluctuations.

The energy storage valve submodule includes a power conversion unit, a direct-current support capacitor, a suppression circuit, and an energy storage unit, the suppression circuit is connected in series with the direct-current support capacitor to form a resistance-capacitance branch, and the resistance-capacitance branch is connected in parallel with the power conversion unit and the energy storage unit, respectively.

In the energy storage valve submodule, the power conversion unit 10 mainly achieves two operating modes including connection and disconnection of the energy storage unit 30 in charging and discharging states through different loops. The power conversion unit 10 may be implemented through a half-bridge circuit formed by power semiconductor devices, a full-bridge circuit formed by power semiconductor devices, a quasi-full-bridge circuit formed by power semiconductor devices, or the like.

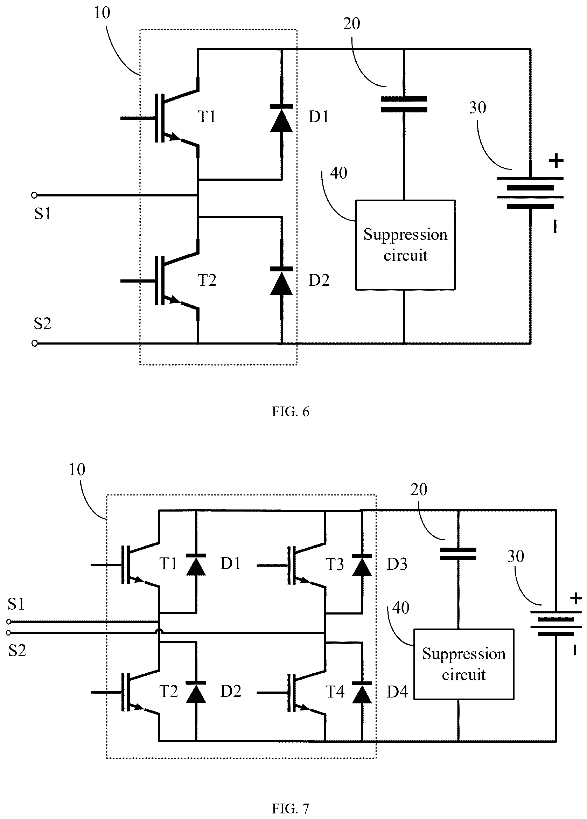

In one embodiment, as shown in FIG. 6, an implementation of the power conversion unit 10 is illustrated. It should be noted that FIG. 6 and drawings of the embodiments following this embodiment of this application are based on the connection manner shown in FIG. 4 for illustration. FIG. 6 illustrates a half-bridge circuit formed by power semiconductor devices, where T1 and T2 are both power devices, for example, may be implemented through an insulated gate bipolar transistor (Insulated Gate Bipolar Transistor, IGBT).

In another embodiment, as shown in FIG. 7, another implementation of the power conversion unit 10 is illustrated. FIG. 7 illustrates a full-bridge circuit, where T1, T2, T3, and T4 are all power devices, which may also be implemented through IGBT.

Additionally, in an example in which the power devices in the power conversion unit 10 are IGBTs, since the IGBTs are switching transistors, gates of the IGBTs in FIG. 6 and FIG. 7 are each connected to a drive circuit which is mainly configured to drive the IGBTs to turn on and turn off. However, for clarity and to highlight the focus of the illustration, the drive circuits connected to the gates of the IGBTs are not shown in this embodiment of this application.

In actual operation, the energy storage unit 30 in the energy storage valve submodule includes a connection mode and a disconnection mode in a charging state, as well as a connection mode and a disconnection mode in a discharging state. Taking FIG. 6 as an example, the operating principles in the above connection modes and disconnection modes are described in conjunction with a schematic circuit diagram, specifically as follows.

(1) Connection mode of the energy storage unit 30 in the charging state: In this mode, a T2 transistor is turned off, and D2 and T1 transistors are also turned off due to reverse voltage. A current from the main circuit of the high-voltage direct-connected energy storage system enters through an S1 port, passes through D1, enters the energy storage unit 30, and then flows out through an S2 port to form a circuit, enabling the energy storage unit 30 to be charged.

(2) Disconnection mode of the energy storage unit 30 in the charging state: In this mode, the T2 transistor is turned on. When the T2 transistor is turned on, a voltage drop across the T2 transistor is very low, the current from the main circuit, after entering through the S1 port, directly passes through T2, and then flows out through the S2 port to form a circuit, disconnecting the energy storage unit 30 from the main circuit, thereby disabling charging. At this time, since the energy storage unit 30 has a voltage, D1 is clamped by the reverse voltage and is in an off state.

(3) Connection mode of the energy storage unit 30 in the discharging state: In this mode, the T2 transistor, D2, and D1 are all turned off, while the T1 transistor is turned on. The current from the main circuit of the high-voltage direct-connected energy storage system directly enters the energy storage unit 30 through the S2 port, passes through the T1 transistor, and then flows out through the S1 port to form a circuit, enabling the energy storage unit 30 to be in a discharging state.

(4) Disconnection mode of the energy storage unit 30 in the discharging state: In this mode, the T2 transistor, D2, and T1 are all turned off. The current from the main circuit of the high-voltage direct-connected energy storage system enters through the S2 port, passes through D2, and directly flows out through the S1 port to form a circuit, completely disconnecting the energy storage unit 30 from the main circuit, thereby disabling discharging.

Based on the description of the operating principle of the power conversion unit 10, it can be learned that it was previously mentioned that during connection and disconnection state switching of the energy storage valve submodule, the current from the main circuit of the high-voltage direct-connected energy storage system enters the energy storage valve submodule, and this current can be regarded as a step current source excitation for the entire energy storage valve submodule. This is because the connection and disconnection state switching of the energy storage valve submodule is achieved by turning on or turning off the IGBTs in the power conversion unit 10, and the IGBTs are turned on or turned off extremely quickly. Therefore, after the IGBTs are turned on, the current surging from the main circuit forms a step current source excitation. Under this step current source excitation, a mismatch between a capacitive reactance of the first capacitor 20 and an inductive reactance of an equivalent stray inductance in the energy storage valve submodule causes underdamped oscillation in the energy storage valve submodule during connection and disconnection state switching. To suppress this underdamped oscillation, it is necessary to minimize the mismatch between the capacitive reactance of the first capacitor 20 and the inductive reactance of the equivalent stray inductance, which essentially involves suppressing the underdamped oscillation current generated in the energy storage valve submodule.

Functions of the first capacitor 20 in the energy storage valve submodule include, but are not limited to, filtering high-frequency harmonics during turning on and turning off of the IGBTs and forming a commutation circuit for power devices, the first capacitor is an indispensable key component in the energy storage valve submodule, and the equivalent stray inductance is also brought by the indispensable energy storage unit 30 in the energy storage valve submodule, so the capacitive reactance and inductive reactance cannot be adjusted as mentioned earlier in the embodiments of this application. The impedance of the first capacitor 20 and the equivalent RLC network of the energy storage unit 30 includes resistance in addition to the reactance including the capacitive reactance and inductive reactance. Therefore, in this embodiment of this application, a resistance in an impedance value of the RLC network is adjusted by additionally providing a suppression circuit 40, making the RLC network in an overdamped state, and suppressing the underdamped oscillation phenomenon of the RLC network, thereby achieving suppression of the underdamped oscillation current.

In some embodiments, the suppression circuit 40 may include a resistor element. That is, the suppression circuit 40 in this embodiment of this application can be implemented by a resistor element. Using the resistor element to provide a resistance value required to suppress the underdamped oscillation current generated in the energy storage valve submodule at a connection moment is not only cost-effective but also convenient and simple in use, greatly reducing additional impact on the overall functionality of the energy storage valve submodule.

In practical applications, the resistor element in this embodiment of this application may be implemented by any device with resistance in any connection manner, for example, may be implemented by a resistor, or implemented by some passive devices with resistance, or the like.

The energy storage valve submodule provided by this embodiment of this application is additionally provided with a suppression circuit for underdamped oscillation, and the suppression circuit is connected in series with the first capacitor, and the resistance-capacitance branch formed by the suppression circuit and the first capacitor connected in series is connected in parallel with the power conversion unit and the energy storage unit, respectively. The suppression circuit can suppress an underdamped oscillation current generated in the energy storage valve submodule at a connection and disconnection state switching moment by adjusting a resistance value of an impedance in the energy storage valve submodule, thereby significantly reducing the underdamped oscillation current generated in the energy storage valve submodule at the connection and disconnection state switching moment, achieving an effect of suppressing the underdamped oscillation current, and greatly reducing harm caused by the underdamped oscillation current to the energy storage valve submodule, thus improving the reliability of the energy storage valve submodule.

Naturally, in a case that the first capacitor is a direct-current support capacitor, the suppression circuit in the energy storage valve submodule is connected in series with the direct-current support capacitor, and the resistance-capacitance branch formed by the suppression circuit and the direct-current support capacitor connected in series is connected in parallel with the power conversion unit and the energy storage unit, respectively. In this way, the suppression circuit can suppress an underdamped oscillation current generated in the energy storage valve submodule at a connection and disconnection state switching moment by adjusting a resistance value of an impedance in the energy storage valve submodule, significantly reducing the underdamped oscillation current generated in the energy storage valve submodule at the connection and disconnection state switching moment, achieving an effect of suppressing the underdamped oscillation current, and greatly reducing harm caused by the underdamped oscillation current to the energy storage valve submodule, thus improving the reliability of the energy storage valve submodule.

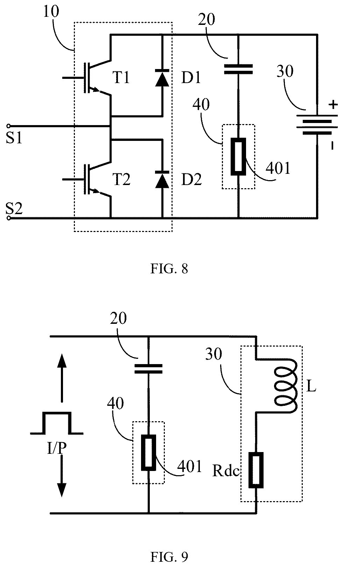

As shown in FIG. 8, this embodiment of this application takes the forgoing resistor element as an example to describe in detail the implementation of the suppression circuit 40. For convenience of illustration, FIG. 8 uses a resistor element 401 as an example, where an underdamped state of the entire energy storage valve submodule is changed by additionally providing the resistor element 401 to a branch of the first capacitor 20 to suppress the underdamped oscillation current. In practical applications, the resistor element 401 may be configured according to needs, which may be implemented through a single resistor, a series-parallel combination of a plurality of resistors, or the like.

Regardless of the implementation of the suppression circuit 40, to achieve the suppression of the underdamped oscillation current generated in the energy storage valve submodule at the connection and disconnection state switching moment by adjusting a resistance value of an impedance in the energy storage valve submodule, a resistance value of the resistor element 401 needs to be designed precisely. The resistance value of the resistor element 401 needs to ensure that a current generated in the entire network of the energy storage valve submodule at the connection and disconnection state switching moment does not exceed a withstand current of the energy storage unit 30, so that the entire network can be in a critical damping or overdamped state.

As shown in FIG. 9, FIG. 9 is a schematic diagram of an equivalent network after a damping resistor is connected in the energy storage valve submodule formed with reference to FIG. 3 and FIG. 8.

According to Kirchhoff's Current Law and Kirchhoff's Voltage Law, the equivalent network in FIG. 9 can be modeled to obtain a second-order differential equation as follows:

$$\mathrm{LC}\frac{d^2u_c}{dt^2}+\left(R_c+R_1\right)C\frac{du_c}{dt}+u_c=i_S*R_1+OCV \quad \text{Formula 1}$$

In the above second-order differential equation, L represents an equivalent stray inductance value in the energy storage unit 30, C represents a capacitance value of the first capacitor 20, Rc represents a resistance value of the resistor element 401 in the suppression circuit 40, R1 represents a resistance value of an equivalent internal resistance Rdc in the energy storage unit 30, $u_c$ represents a voltage in the first capacitor 20, naturally $C\dfrac{du_c}{dt}$ represents a current in the first capacitor 20, $i_s$ represents a current entering the energy storage unit 30 at a connection moment of the energy storage valve submodule, and OCV represents an initial voltage in the first capacitor 20 in a steady state of the energy storage valve submodule. The energy storage valve submodule is in a steady state when a step current in the main circuit has not yet entered the energy storage valve submodule, and in this steady state, there is no direct current flowing through the capacitor, meaning the circuit is disconnected, so OCV may be understood as a voltage in the energy storage unit 30.

The above second-order differential equation is solved to obtain a general solution of a characteristic equation as follows:

$$LCp^2 + (R_C + R_1)Cp + 1 = 0 \quad \text{Formula 2}$$

Formula 2 is a homogeneous equation, where p represents $\dfrac{du_c}{dt}$ in Formula 1. Thus, it can be learned from according to Formula 2 that the resistance value of the resistor element 401 is related to a capacitance value of the first capacitor 20 in the energy storage valve submodule, an inductance value of an equivalent stray inductance L in the energy storage valve submodule, and a resistance value of an equivalent internal resistance Rdc in the energy storage valve submodule.

To be specific, in practical applications, specific values of the capacitance value of the first capacitor 20 in the energy storage valve submodule, the inductance value of the equivalent stray inductance L in the energy storage unit 30 in the energy storage valve submodule, and the resistance value of the equivalent internal resistance Rdc in the energy storage unit 30 can be substituted into Formula 2 to calculate the resistance value of the resistor element 401.

For example, in a high-voltage direct-connected energy storage system scenario, if the capacitance value of the first capacitor 20 is at an mF level, the inductance value of the equivalent stray inductance L in the energy storage unit 30 is at a μH level, and the resistance value of the equivalent internal resistance Rdc in the energy storage unit 30 is at a level of 1 mΩ to 10 mΩ. Moreover, under these conditions, if the entire network of the energy storage valve submodule is required to be in an overdamped state at a connection and disconnection mode switching moment, the resistance value range of the resistor element 401 can be obtained as 10 mΩ to 500 mΩ based on Formula 2, for example, the resistance value of the resistor element 401 may be 50 mΩ, 100 mΩ, 150 mΩ, or the like, which is not listed exhaustively herein as long as it is within the value range.

In this embodiment of this application, the value range of the resistor element is set to 10 mΩ to 500 mΩ, enabling the resistor element to match a capacitance value of the first capacitor, an inductance value of an equivalent stray inductance in the energy storage unit, and a resistance value of an equivalent internal resistance in the energy storage unit in a high-voltage direct-connected energy storage system scenario, thereby enabling precise suppression of underdamped oscillation in the energy storage valve submodule in the high-voltage direct-connected energy storage system scenario.

In this embodiment of this application, based on Kirchhoff's Current Law and Kirchhoff's Voltage Law in the energy storage valve submodule, a second-order differential equation of a topology network model of the energy storage valve submodule is constructed, and the second-order differential equation is solved to obtain a function relationship among an equivalent stray inductance of the energy storage unit, an equivalent internal resistance of the energy storage unit, the first capacitor, and the resistor element. Then, in practical applications, the capacitance value of the first capacitor, the equivalent stray inductance value of the energy storage unit, and the equivalent internal resistance value of the energy storage unit are substituted into the function relationship for solving to obtain the resistance value of the resistor element. Since the second-order differential equation is constructed based on the energy storage valve submodule which is additionally provided with the resistor element, the second-order differential equation can accurately reflect characteristics of the entire topology of the energy storage valve submodule, enabling precise calculation of the resistance value of the resistor element, thereby effectively suppressing the underdamped oscillation current generated in the energy storage valve submodule.

Additionally, considering that the underdamped oscillation current in the energy storage valve submodule may be generated not only at a connection moment of the energy storage unit 30 in a charging state but also at a connection moment of the energy storage unit 30 in a discharging state, this embodiment of this application provides a method to achieve precise suppression of underdamped oscillation under different conditions including the charging state and the discharging state of the energy storage unit 30.

In one embodiment, the suppression circuit 40 further includes a switch circuit 402, and the switch circuit 402 is configured to control a connection and disconnection state of the resistor element.

For connection manners between the switch circuit 402 and the resistor element 401, this embodiment of this application provides three manners. The three manners are respectively described in detail below.

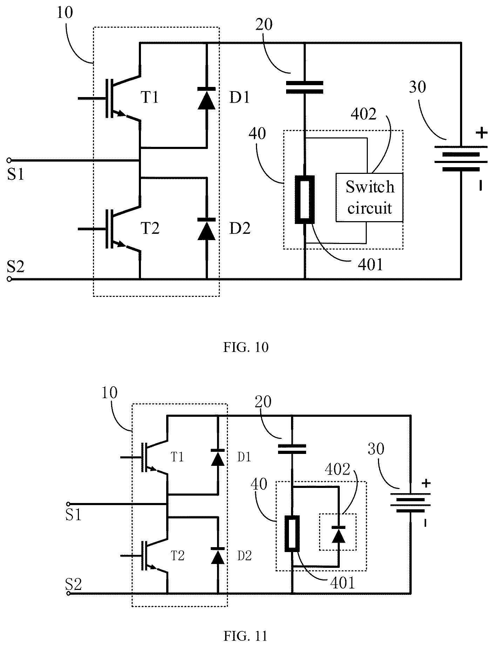

As shown in FIG. 10, in one embodiment, the switch circuit 402 is connected in parallel with the resistor element 401.

A function of the switch circuit 402 is to control a connection and disconnection state of the resistor element 401 in the energy storage valve submodule. That is, by connecting the switch circuit 402 in parallel with the resistor element 401, when the energy storage unit 30 is in a charging state, the switch circuit 402 is turned off to allow the resistor element 401 to be in a connection state; and when the energy storage unit 30 is in a discharging state, the switch circuit 402 is turned on to allow the resistor element 401 to be in a disconnection state.

When the resistor element 401 is in the connection state, the switch circuit 402 is turned off, and under this condition, a current from the main circuit passes through the resistor element 401 to achieve suppression of an underdamped oscillation current generated at the connection moment when the energy storage unit 30 is in the charging state. Similarly, when the resistor element 401 is in the disconnection state, the switch circuit 402 is turned on, and under this condition, the current from the main circuit passes through the switch circuit 402, which is equivalent to that almost no current passes through the resistor element 401, and the resistor element 401 is short-circuited by the switch circuit 402, failing to suppress the underdamped oscillation current generated at the connection moment when the energy storage unit 30 is in the discharging state.

As shown in FIG. 11, an example in which the switch circuit 402 is a diode is used for illustrating the suppression circuit 40. Based on the switching characteristics of the diode, the diode can be in an off state when the energy storage unit 30 is in the charging state, so the current from the main circuit at the connection moment can pass through only the resistor element 401. When the energy storage unit 30 is in the discharging state, the diode is in an on state, and the resistor element 401 is short-circuited, so the current from the main circuit at the connection moment flows directly through the diode. The diode is used to serve as the switch circuit, and the diode requires no control and switches between an on state and an off state based on a voltage in the circuit and has advantages of high switching speed and extremely short switching time, enabling rapid and precise control of a connection and disconnection state of the resistor element, thereby achieving more precise suppression of underdamped oscillation in different states of charging and discharging of the energy storage unit.

It should be noted that when the switch circuit is a diode, directions of a positive electrode and a negative electrode are not unique when the switch circuit is connected, which may be set based on a position of the diode and a positive electrode and negative electrode connection direction of the diode provided in a circuit where a resistor to be turned on is located. Additionally, the above diode is only an example. If the switch circuit is a non-directional switch, the switch circuit is controlled to be turned on and turned off based on the circuit where the resistor to be turned on is located.

In this embodiment of this application, the switch circuit is connected in parallel with the resistor element, and by turning the switch circuit on and off, the resistor element is controlled to be connected or disconnected in the energy storage valve submodule. Only when connected in the energy storage valve submodule to work, the resistor element can suppress the underdamped oscillation generated at a connection moment of the energy storage unit in a corresponding state, thereby improving precision of suppression of the underdamped oscillation in the energy storage valve submodule.

The above is an embodiment in which the resistor element 401 includes one resistor and the switch circuit 402 includes one switch to achieve precise suppression of underdamped oscillation in different processes of charging and discharging of the energy storage unit 30. Precise suppression of underdamped oscillation in different processes of charging and discharging of the energy storage unit 30 can also be achieved by the resistor element 401 including a plurality of resistors and the switch circuit 402 including a plurality of switches.

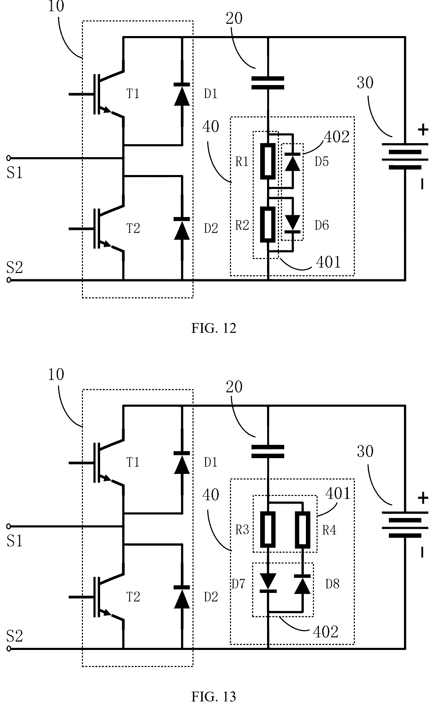

In one embodiment, as shown in FIG. 12, the resistor element 401 includes a first resistor R1 and a second resistor R2 connected in series with each other, the switch circuit 402 further includes a first switch D5 and a second switch D6, the first switch D5 is connected in parallel with the first resistor R1, and the second switch D6 is connected in parallel with the second resistor R2. In some embodiments, the first switch D5 and/or the second switch D6 is a diode.

For ease of explanation, FIG. 12 illustrates an example in which the first switch is a diode D5, the second switch is a diode D6, the first resistor is R1, and the second resistor is R2. It should be noted that in practical applications, the first switch D5 and the second switch D6 may both be diodes, or one of the first switch D5 and the second switch D6 may be a diode.

Similar to the above principle, in FIG. 12, when the energy storage unit 30 is in a charging state, at a connection moment of the energy storage valve submodule, the first switch D5 is reversely turned off, and the second switch D6 is forwardly turned on. A current from the main circuit passes through the first resistor R1 and then through the second switch D6, meaning under this condition, only the first resistor R1 is in a connection state, while the second resistor R2 is in a disconnection state, so the first resistor R1 can suppress an underdamped oscillation current generated at a connection moment when the energy storage unit 30 is in the charging state.

When the energy storage unit 30 is in a discharging state, at a connection moment of the energy storage valve submodule, the first switch D5 is forwardly turned on, and the second switch D6 is reversely turned off. The current from the main circuit passes through the second resistor R2 and then through the first switch D5, meaning under this condition, only the second resistor R2 is in a connection state, while the first resistor R1 is in a disconnection state, so the second resistor R2 can suppress an underdamped oscillation current generated at the connection moment when the energy storage unit 30 is in the discharging state.

Similarly, in this embodiment, in an example in which the first switch D5 and the second switch D6 are diodes, directions of a positive electrode and a negative electrode are not unique when the first switch D5 and the second switch D6 are connected, which may be set based on a position of the diode and a positive electrode and negative electrode connection direction of the diode provided in a circuit where a resistor to be turned on is located.

Based on the above operating process, according to actual needs, for example, a degree of an underdamped oscillation current generated at a connection moment when the energy storage unit 30 is in a charging state is greater than a degree of an underdamped oscillation current generated at a connection moment when the energy storage unit 30 is in a discharging state, a larger degree of suppression of the underdamped oscillation current generated at the connection moment when the energy storage unit 30 is in the charging state is set, while a degree of suppression of the underdamped oscillation current generated at the connection moment when the energy storage unit 30 is in the discharging state may be smaller. Based on this, in one embodiment, a resistance value of the first resistor R1 is greater than a resistance value of the second resistor R2, that is, a larger resistance value results in a larger degree of suppression of the underdamped oscillation current. Thus, by setting different resistance values for the first resistor R1 and the second resistor R2, differentiated suppression of the underdamped oscillation current generated at the connection moment when the energy storage unit 30 is in the charging state or the discharging state is achieved, thereby improving precision of suppression of the underdamped oscillation in the energy storage valve submodule.

In one embodiment, as shown in FIG. 13, the resistor element 401 includes a third resistor R3 and a fourth resistor R4 connected in parallel with each other, the switch circuit 402 further includes a third switch D7 and a fourth switch D8, the third switch D7 is connected in series with the third resistor R3, and the fourth switch D8 is connected in series with the fourth resistor R4. In some embodiments, the third switch D7 and/or the fourth switch D8 is a diode.

Similarly, for ease of explanation, FIG. 13 illustrates an example in which the third switch is a diode D7, the fourth switch is a diode D8, the third resistor is R3, and the fourth resistor is R4.

It should be noted that in FIG. 13, a position of the second resistor R4 and a position of the fourth switch D8 may be exchanged, and the two manners are essentially equivalent. As mentioned above, in practical applications, the third switch D7 and the fourth switch D8 are both diodes, or one of the third switch D7 and the fourth switch D8 may be a diode. Naturally, when the third switch D7 and the fourth switch D8 are diodes, if the position of the second resistor R4 and the position of the second switch D8 are exchanged, a connection direction of a positive electrode and a negative electrode of the diode as a switch may also be changed accordingly. That is, in this embodiment of this application, when the third switch D7 and the fourth switch D8 are diodes as an example, the directions of the positive electrode and negative electrode are not unique when the third switch D7 and the fourth switch D8 are connected, which may be set according to a position of the diode and a positive electrode and negative electrode connection direction of the diode provided in a circuit where a resistor to be turned on is located.

Similar to the above principle, in FIG. 13, when the energy storage unit 30 is in a charging state, at a connection moment of the energy storage valve submodule, the third switch D7 is forwardly turned on, and the fourth switch D8 is reversely turned off. A current from the main circuit passes through the third resistor R3 and then flows out through the third switch D7, meaning under this condition, only the third resistor R3 is in a connection state, while the fourth resistor R4 is in a disconnection state, so the third resistor R3 can suppress an underdamped oscillation current generated at the connection moment when the energy storage unit 30 is in the charging state.

When the energy storage unit 30 is in a discharging state, at a connection moment of the energy storage valve submodule, the third switch D7 is reversely turned off, and the fourth switch D8 is forwardly turned on. The current from the main circuit passes through the fourth switch D8 and then flows out through the fourth resistor R4, meaning under this condition, only the fourth resistor R4 is in a connection state, while the third resistor R3 is in a disconnection state, so the fourth resistor R4 can suppress an underdamped oscillation current generated at the connection moment when the energy storage unit 30 is in the discharging state.

Based on the above operating process, according to actual needs, for example, a degree of an underdamped oscillation current generated at a connection moment when the energy storage unit 30 is in a charging state is greater than a degree of an underdamped oscillation current generated at a connection moment when the energy storage unit 30 is in a discharging state, a larger degree of suppression of the underdamped oscillation current generated at the connection moment when the energy storage unit 30 is in the charging state is set, while a degree of suppression of the underdamped oscillation current generated at the connection moment when the energy storage unit 30 is in the discharging state may be smaller. Based on this, in one embodiment, a resistance value of the third resistor R3 is greater than a resistance value of the fourth resistor R4, that is, a larger resistance value results in a larger degree of suppression of the underdamped oscillation current. Thus, by setting different resistance values for the third resistor R3 and the fourth resistor R4, differentiated suppression of the underdamped oscillation current generated at the connection moment when the energy storage unit 30 is in the charging state or the discharging state is achieved, thereby improving precision of suppression of the underdamped oscillation in the energy storage valve submodule.

In this embodiment of this application, two resistors are additionally provided in the energy storage valve submodule, and then two different switches are additionally provided to respectively control a connection and disconnection state of the two resistors in the energy storage valve submodule. Only one of the two resistors is connected when the energy storage unit is in a charging state or a discharging state. On this basis, resistance values of the two resistors are different, so that a degree of suppression of underdamped oscillation varies when the energy storage unit is in the charging state or the discharging state, thereby enabling more precise suppression of underdamped oscillation in different states of charging and discharging of the energy storage unit.

After the suppression circuit 40 is connected in series with the first capacitor 20 in the energy storage valve submodule, due to a resistor in the suppression circuit 40, an overvoltage stress at a turn-off moment of an IGBT in the power conversion unit 10 increases accordingly. At the same on-off di/dt (rate of change of turn-off current per unit time) value of the IGBT, an overvoltage U at the turn-off moment of the IGBT increases according to U = Ldi/dt + iR, where R represents a resistance value of the resistor element, and L represents a stray inductance of the resistor element.

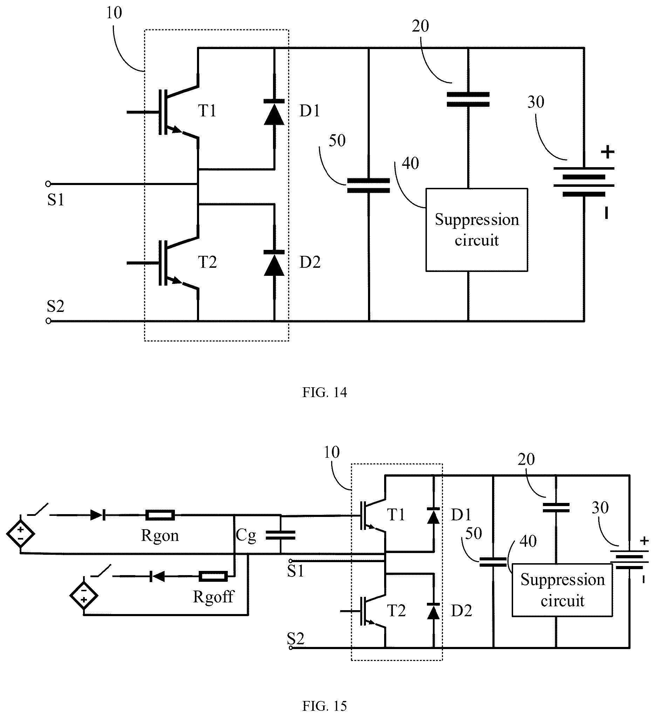

Based on this, this embodiment of this application reduces the overvoltage stress at the turn-off moment of the IGBT by connecting a second capacitor in parallel with the resistance-capacitance branch as a whole. As shown in FIG. 14, in one embodiment, the energy storage valve submodule further includes a second capacitor 50, and the second capacitor 50 is connected in parallel with the resistance-capacitance branch.

It should be noted that a connection method of the second capacitor 50 shown in FIG. 14 is only an example. In practical applications, the second capacitor 50 may be connected in parallel as a whole between the power conversion unit 10 and the resistance-capacitance branch as shown in FIG. 14, and may alternatively be connected in parallel as a whole between the resistance-capacitance branch and the energy storage unit 30. Certainly, if the resistance-capacitance branch is connected in parallel behind the energy storage unit 30 as shown in FIG. 5, the second capacitor 50 may alternatively be connected in parallel as a whole behind the resistance-capacitance branch or between the energy storage unit 30 and the resistance-capacitance branch based on the schematic diagram of FIG. 5.

In one embodiment, the second capacitor 50 includes a buffer capacitor, that is, a main function of the second capacitor 50 in the energy storage valve submodule is to buffer a high-frequency current in a current at a connection moment of the energy storage valve submodule, reducing a rate of change of a turn-off current at the turn-off moment of the IGBT, thereby reducing the overvoltage stress at the turn-off moment of the IGBT.

In one embodiment, a capacitance value of the second capacitor 50 is less than a capacitance value of the first capacitor 20.

By setting the capacitance value of the second capacitor 50 to be significantly less than the capacitance value of the first capacitor 20, a certain distinction is made between high-frequency current passing through the second capacitor 50 and high-frequency current passing through the first capacitor 20 at a connection moment of the energy storage valve submodule, for example, a high-frequency component of the current mainly passes through the second capacitor 50, and a low-frequency component of the current mainly passes through the first capacitor 20.

In practical applications, during determination of the capacitance value of the second capacitor 50, the determination process may be achieved through circuit simulation. During simulation, the overvoltage capability at the turn-off moment of the IGBT needs to be considered, and whether an excessively large capacitance value of the second capacitor 50 exacerbates a degree of underdamped oscillation of the energy storage valve submodule also needs to be considered. Therefore, the capacitance value of the second capacitor 50 needs to be set within a range that does not cause underdamped oscillation with other devices in the energy storage valve submodule.

In some embodiments, the capacitance value of the second capacitor 50 may be at a sub-mF level. For example, a capacitance value range of the second capacitor 50 includes 10 uF to 300 uF. For another example, when the second capacitor 50 is a buffer capacitor, a capacitance value range of the buffer capacitor includes 10 uF to 300 uF. This capacitance value range may be a value range in a high-voltage direct-connected scenario. When the second capacitor 50 has a value within this range, the overvoltage stress at the turn-off moment of the IGBT can be reduced, and additional impact on the overall topology of the energy storage valve submodule is also reduced.

In this embodiment of this application, the second capacitor 50 (taking a buffer capacitor as an example) may be one buffer capacitor or a combination of N buffer capacitors connected in parallel, where N may be a positive integer greater than or equal to 1, for example, 2, 3, 5, 8, 10, 20, 50, or 100. A specific number of the buffer capacitors is not limited in this embodiment of this application.

In this embodiment of this application, the second capacitor is connected in parallel with the resistance-capacitance branch as a whole, so that overvoltage stress at the turn-off moment of the IGBT can be reduced, reducing a risk of failure of the IGBT due to excessive overvoltage stress, thereby improving operational reliability of the IGBT and further improving operational reliability of the energy storage valve submodule.

For example, if the first capacitor 20 is a direct-current support capacitor and the second capacitor 50 is a buffer capacitor, a capacitance value of the buffer capacitor is less than a capacitance value of the direct-current support capacitor. In this way, by setting the capacitance value of the buffer capacitor to be less than the capacitance value of the direct-current support capacitor, a certain distinction is made between high-frequency current passing through the buffer capacitor and high-frequency current passing through the direct-current support capacitor at a connection moment of the energy storage valve submodule. Since the capacitance value of the buffer capacitor is significantly less than the capacitance value of the direct-current support capacitor, a risk of exacerbating a degree of underdamped oscillation of the energy storage valve submodule due to an excessively large capacitance value of the buffer capacitor is reduced, thereby reducing a risk of additional impact while reducing overvoltage stress at a turn-off moment of a power device in the power conversion unit, thus improving operational reliability of the energy storage valve submodule.

Additionally, the buffer capacitor included in the energy storage valve submodule is connected in parallel with the resistance-capacitance branch. In this way, a buffer capacitor is connected in parallel with the resistance-capacitance branch as a whole, so that overvoltage stress at a turn-off moment of a power device in the power conversion unit can be reduced, reducing a risk of failure of the power device in the power conversion unit due to excessive overvoltage stress, thus improving operational reliability of the power device in the power conversion unit and further improving operational reliability of the energy storage valve submodule.

In the above embodiment, the overvoltage stress at the turn-off moment of the IGBT is reduced by connecting the second capacitor 50 in parallel. However, in practical applications, after the suppression circuit 40 is connected into the energy storage valve submodule, due to a resistance value of the suppression circuit 40, a significant turn-off overvoltage exists in the IGBT, and the second capacitor 50 alone may not completely offset the turn-off overvoltage stress of the IGBT. Therefore, this embodiment of this application further provides a method to reduce the turn-off di/dt of the IGBT, further reducing the turn-off overvoltage of the IGBT, thereby reducing a risk of failure of the IGBT due to excessive overvoltage stress.

Specifically, the power conversion unit 10 of the energy storage valve submodule is implemented through IGBTs. As described in the previous embodiments, a gate of each IGBT in the power conversion unit 10 is connected to a drive circuit, and the drive circuit drives the IGBT to be turned on and off. In some embodiments, a parameter value of a drive device in the drive circuit is inversely correlated with a rate of change of a turn-off current of the IGBT. That is, this embodiment of this application can reduce the turn-off di/dt (that is, the rate of change of the turn-off current) of the IGBT by increasing the parameter value of the drive device.

As shown in FIG. 15, FIG. 15 is a schematic diagram of an IGBT drive circuit. For clarity in description, FIG. 15 only shows a schematic diagram of one IGBT connected to a drive circuit. In FIG. 15, Rgon represents a gate turn-on resistor, Rgoff represents a gate turn-off circuit, and Cg represents a gate capacitor. The IGBT is turned on and off through Rgon, Rgoff, diodes D1 and D2, and the gate capacitor Cg.

Since it is necessary to reduce the di/dt at the turn-off moment of the IGBT, in one embodiment, the increasing the parameter value of the drive device may include increasing a resistance value of the gate turn-off resistor Rgoff, and/or increasing a capacitance value of the gate capacitor Cg. That is, increasing the parameter value of either the gate turn-off resistor Rgoff or the gate capacitor Cg, or increasing both, can both reduce the di/dt at the turn-off moment of the IGBT.

In practical applications, during calculation of specific values by which the gate turn-off resistor Rgoff and the gate capacitor Cg need to be increased, the specific values may be determined based on the specification of the IGBT. Different specifications of the IGBT result in different voltage and current ratings of the IGBT, and the magnitude of adjustment required for the parameter value of the drive device in the drive circuit varies accordingly, so adjustments need to be made based on actual conditions.

For example, taking an IGBT voltage and current rating of 4.5 kV/3 kA as an example, under this condition, for a flexible direct-current project scenario, the di/dt at the turn-off moment of the IGBT may reach 5000 A/μs by adjusting the parameter value of the drive device. In a high-voltage direct-connected energy storage system scenario, the di/dt at the turn-off moment of the IGBT of the energy storage valve submodule may be reduced to 3000 A/μs by adjusting the parameter value of the drive device. By reducing the di/dt at the turn-off moment of the IGBT of the energy storage valve submodule to 3000 A/μs, the turn-off overvoltage of the IGBT can be effectively reduced.

In this embodiment of this application, based on a characteristic that a rate of change of a turn-off current of a power device in the power conversion unit is inversely correlated with a parameter value of a drive device in a drive circuit of the power device, the rate of change of the turn-off current of the power device in the power conversion unit can be reduced, further reducing the turn-off overvoltage of the power device in the power conversion unit, thereby significantly reducing a problem of failure of the power device in the power conversion unit due to excessive overvoltage stress, and improving operational reliability of the power conversion unit.

In practical applications, once the suppression circuit 40 is additionally provided in the energy storage valve submodule, due to a resistance characteristic of the suppression circuit 40, additional ohmic heat loss is introduced to the entire energy storage valve submodule. Based on this, the heat loss introduced by the suppression circuit 40 to the energy storage valve submodule can be reduced by adjusting a connection and disconnection switching frequency of the energy storage valve submodule.

In one embodiment, the connection and disconnection switching frequency of the energy storage valve submodule is positively correlated with energy loss generated by the suppression circuit.

Assuming that during a single connection and disconnection operation of the energy storage valve submodule in the high-voltage direct-connected energy storage system, energy loss generated by a resistor of the suppression circuit 40 is E, and an equivalent connection and disconnection switching frequency of the energy storage valve submodule is f, a heat power P of the resistor of the suppression circuit 40 is approximately equal to f*E. That is, a higher connection and disconnection switching frequency f results in a greater energy loss E generated by the resistor of the suppression circuit 40, making the connection and disconnection switching frequency positively correlated with the energy loss generated by the suppression circuit.

Based on the above relationship between the equivalent connection and disconnection switching frequency of the energy storage valve submodule and the energy loss generated by the suppression circuit, a value of the equivalent connection and disconnection switching frequency can be set according to a specific energy loss value generated by the resistor of the suppression circuit 40 of the energy storage valve submodule. For example, in a flexible direct-current practical project, a value of f for a converter valve may be set to around 100 Hz to 200 Hz; and in application of a direct-current direct-connected energy storage valve, a value of the connection and disconnection switching frequency f may be set between 50 Hz and 150 Hz.

It should be noted that the above values of the equivalent connection and disconnection switching frequency of the energy storage valve submodule are only examples. In practical applications, under the premise of meeting operational requirements of the high-voltage direct-connected energy storage system, the equivalent connection and disconnection switching frequency should be set to a smaller value of the connection and disconnection switching frequency acceptable by the system as much as possible, that is, the loss of the high-voltage direct-connected energy storage system can be optimized by minimizing the connection and disconnection switching frequency of the system.

In this embodiment of this application, based on the characteristic that the connection and disconnection switching frequency of the energy storage valve submodule is positively correlated with the energy loss generated by the suppression circuit, an equivalent connection and disconnection switching frequency for a single connection and disconnection operation of the energy storage valve submodule in the high-voltage direct-connected energy storage system is set, enabling connection and disconnection of the energy storage valve submodule at a low equivalent connection and disconnection switching frequency, thereby reducing loss of the energy storage valve submodule and improving economic efficiency and safety of application of the energy storage valve submodule.

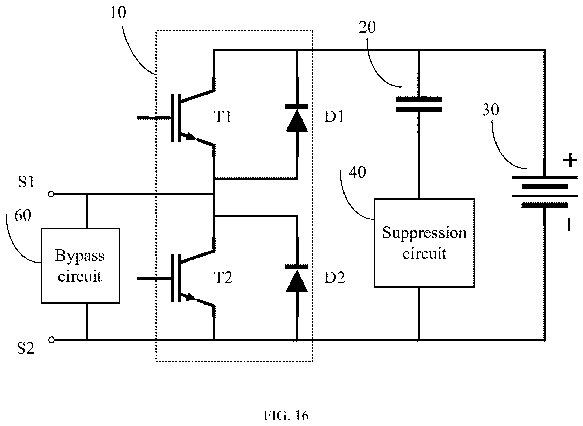

In one embodiment, as shown in FIG. 16, the energy storage valve submodule further includes a bypass circuit 60, and the bypass circuit 60 is connected in parallel with the energy storage valve submodule.

Still referring to FIG. 16, the bypass circuit 60 is provided between two ports S1 and S2 of the energy storage valve submodule and the power conversion unit 10, enabling the energy storage valve submodule to be disconnected from the high-voltage direct-connected energy storage system through the bypass circuit 60 in a case of a fault in the energy storage valve submodule or a potential fault in the energy storage valve submodule.

For example, when an overvoltage occurs in the high-voltage direct-connected energy storage system, the bypass circuit 60 enables the energy storage valve submodule to be conveniently and promptly disconnected from the high-voltage direct-connected energy storage system temporarily, significantly reducing a probability of a fault of the energy storage valve submodule due to the overvoltage generated in the high-voltage direct-connected energy storage system, thereby improving operational stability and safety of the high-voltage direct-connected energy storage system.

In some embodiments, the bypass circuit 60 may be a bypass switch. In some embodiments, the bypass switch may include, but is not limited to, a mechanical bypass switch or a semiconductor device bypass switch.

In a case of a fault in the energy storage valve submodule, a current from the main circuit enters from the S1 port. At this time, the bypass switch is turned on, and the current flows out from the S2 port through the bypass switch, causing short-circuiting of the entire energy storage valve submodule, thereby achieving disconnection of the entire energy storage valve submodule from the high-voltage direct-connected energy storage system.

In this embodiment of this application, by providing the bypass circuit between the ports where the energy storage valve submodule is connected to the main circuit of the high-voltage direct-connected energy storage system, the energy storage valve submodule can be disconnected from the high-voltage direct-connected energy storage system in a case of a fault in the energy storage valve submodule, thereby improving operational stability and safety of the high-voltage direct-connected energy storage system.

Additionally, an embodiment of this application provides a high-voltage direct-connected energy storage system, and the high-voltage direct-connected energy storage system includes the energy storage valve submodule provided in any of the above embodiments.

The high-voltage direct-connected energy storage system in this embodiment of this application may include a direct-current type high-voltage direct-connected energy storage system or an alternating-current type high-voltage direct-connected energy storage system. FIG. 1 shows a diagram of an example of an alternating-current type high-voltage direct-connected energy storage system.

Since the energy storage valve submodule provided by this embodiment of this application can suppress an underdamped oscillation current generated at a connection and disconnection mode switching moment, exhibiting high reliability, so that the high-voltage direct-connected energy storage system constructed using the energy storage valve submodule of this embodiment of this application also exhibits high reliability.

Technical features of the above embodiments can be combined in any manner. For brevity of description, not all possible combinations of the technical features in the above embodiments are described. However, as long as there is no contradiction in the combinations of these technical features, they all should be considered within the scope described in this specification.

The above embodiments only express several implementations of this application, with specific and detailed descriptions, but they cannot be understood as limiting the patent scope of this application. It should be noted that for those of ordinary skill in the art, various variations and improvements can be made without departing from the concept of this application, all of which fall within the protection scope of this application. Therefore, the protection scope of this application should be subject to the appended claims.

## Claims

1. An energy storage valve submodule, wherein the energy storage valve submodule comprises a power conversion unit, a first capacitor, a suppression circuit, and an energy storage unit, wherein the suppression circuit is connected in series with the first capacitor to form a resistance-capacitance branch; and the resistance-capacitance branch is connected in parallel with the power conversion unit and the energy storage unit, respectively.

2. The energy storage valve submodule according to claim 1, wherein the suppression circuit comprises a resistor element.

3. The energy storage valve submodule according to claim 2, wherein the suppression circuit further comprises a switch circuit; and the switch circuit is configured to control a connection and disconnection state of the resistor element.

4. The energy storage valve submodule according to claim 3, wherein the switch circuit is connected in parallel with the resistor element.

5. The energy storage valve submodule according to claim 3, wherein the resistor element comprises a first resistor and a second resistor connected in series with each other; the switch circuit further comprises a first switch and a second switch; the first switch is connected in parallel with the first resistor; and the second switch is connected in parallel with the second resistor.

6. The energy storage valve submodule according to claim 5, wherein the first switch and/or the second switch is a diode.

7. The energy storage valve submodule according to claim 5, wherein a resistance value of the first resistor is greater than a resistance value of the second resistor.

8. The energy storage valve submodule according to claim 3, wherein the resistor element comprises a third resistor and a fourth resistor connected in parallel with each other; the switch circuit further comprises a third switch and a fourth switch; the third switch is connected in series with the third resistor; and the fourth switch is connected in series with the fourth resistor.

9. The energy storage valve submodule according to claim 8, wherein the third switch and/or the fourth switch is a diode.

10. The energy storage valve submodule according to claim 8, wherein a resistance value of the third resistor is greater than a resistance value of the fourth resistor.

11. The energy storage valve submodule according to any one of claims 2 to 10, wherein a resistance value range of the resistor element comprises 10 mΩ to 500 mΩ.

12. The energy storage valve submodule according to any one of claims 1 to 11, wherein the energy storage valve submodule further comprises a second capacitor; and the second capacitor is connected in parallel with the resistance-capacitance branch.

13. The energy storage valve submodule according to claim 12, wherein the second capacitor comprises a buffer capacitor.

14. The energy storage valve submodule according to claim 12, wherein a capacitance value of the second capacitor is less than a capacitance value of the first capacitor.

15. The energy storage valve submodule according to claim 12, wherein a capacitance value range of the second capacitor comprises 10 uF to 300 uF.

16. The energy storage valve submodule according to any one of claims 1 to 15, wherein the first capacitor comprises a direct-current support capacitor.

17. The energy storage valve submodule according to any one of claims 1 to 16, wherein the energy storage valve submodule further comprises a bypass circuit; and the bypass circuit is connected in parallel with the energy storage valve submodule.

18. The energy storage valve submodule according to any one of claims 1 to 17, wherein a connection and disconnection switching frequency of the energy storage valve submodule is positively correlated with energy loss generated by the suppression circuit.

19. The energy storage valve submodule according to any one of claims 1 to 18, wherein a rate of change of a turn-off current of a power device in the power conversion unit is inversely correlated with a parameter value of a drive device in a drive circuit of the power device.

20. The energy storage valve submodule according to claim 19, wherein the parameter value of the drive device comprises a resistance value of a gate turn-off resistor in the drive circuit, and/or a capacitance value of a gate capacitor in the drive circuit.

21. A high-voltage direct-connected energy storage system, wherein the high-voltage direct-connected energy storage system comprises the energy storage valve submodule according to any one of claims 1 to 20.

FIG. 1

S1

S2

Power
conversion
unit

10

20

30

+

−

FIG. 2

I/P

20

30

L

Rdc

FIG. 3

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

| International application No. |
|---|
| **PCT/CN2024/097814** |

### A. CLASSIFICATION OF SUBJECT MATTER

H02J 3/28(2006.01)i

According to International Patent Classification (IPC) or to both national classification and IPC

### B. FIELDS SEARCHED

Minimum documentation searched (classification system followed by classification symbols)

IPC：H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 储能阀, 阻容, 电阻, 电容, 二极管, 抑制, storage, converter, resistor, capacitor, diode, restrain

### C. DOCUMENTS CONSIDERED TO BE RELEVANT

| Category* | Citation of document, with indication, where appropriate, of the relevant passages | Relevant to claim No. |
|---|---|---|
| X | CN 202524283 U (CHINA UNIVERSITY OF MINING AND TECHNOLOGY) 07 November 2012 (2012-11-07) description, paragraphs 11-20, and figures 1-2 | 1-21 |
| A | CN 109039046 A (HUAZHONG UNIVERSITY OF SCIENCE AND TECHNOLOGY) 18 December 2018 (2018-12-18) entire document | 1-21 |
| A | CN 114113798 A (STATE GRID ZHEJIANG ELECTRIC POWER CO., LTD. ZHOUSHAN POWER SUPPLY COMPANY) 01 March 2022 (2022-03-01) entire document | 1-21 |
| A | CN 114189135 A (XUJI ELECTRIC CO., LTD. et al.) 15 March 2022 (2022-03-15) entire document | 1-21 |
| A | WO 2020094030 A1 (NR ELECTRIC CO., LTD. et al.) 14 May 2020 (2020-05-14) entire document | 1-21 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 September 2024** | **10 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097814**

| Patent document cited in search report | | | Publication date (day/month/year) | Patent family member(s) | | | Publication date (day/month/year) |
|---|---|---|---|---|---|---|---|
| CN | 202524283 | U | 07 November 2012 | None | | | |
| CN | 109039046 | A | 18 December 2018 | CN | 109039046 | B | 14 February 2020 |
| CN | 114113798 | A | 01 March 2022 | CN | 114113798 | B | 13 September 2022 |
| CN | 114189135 | A | 15 March 2022 | None | | | |
| WO | 2020094030 | A1 | 14 May 2020 | CN | 109586327 | A | 05 April 2019 |
| | | | | CN | 109586327 | B | 26 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023106870411